# EUROPEAN PATENT APPLICATION

(11) **EP 2 193 723 A1**
(43) Date of publication of application: **09.06.2010**
(21) Application number: 08830458.9
(22) Date of filing: 11.09.2008
(51) Int. Cl.: A23L 1/22, A23L 1/221, A23L 1/226, A23L 2/00, A23L 2/38

(54) **FOOD OR DRINK SHOWING IMPROVED TASTE OF SWEETENER**

(30) Priority: 11.09.2007 JP 2007235730
(71) Applicant: Suntory Holdings Limited, Kita-ku, Osaka-shi, Osaka 530-8203 (JP)
(72) Inventor: NONAKA, Yuji, Kawasaki-shi Kanagawa 211-0067 (JP); ZEIDA, Mitsuhiro, Kawasaki-shi Kanagawa 211-0067 (JP)
(74) Representative: Vossius & Partner
(86) International application number: PCT/JP2008/066446
(87) International publication number: WO 2009/035047

(57) **Abstract**

The present invention aims to provide a food or drink having an improved sharpness in an aftertaste without reduction in its peak sweetness. According to the present invention, a food or drink containing a sweetener in which sweetness persisting as an unpalatable aftertaste is suppressed, and which retains a nearly intact degree of sweetness of the sweetener at its peak can be obtained by adding a polymerized polyphenol, particularly, a polymerized catechin, which is a polymerized polyphenol derived from tea, to the food or drink.

## Description

### TECHNICAL FIELD

The present invention relates to a food or drink containing a sweetener and a polymerized polyphenol. More particularly, the present invention relates to a food or drink with an improved sweetener (particularly, a high-intensity sweetener) taste that contains a polymerized polyphenol (particularly, a polymerized catechin) as an active ingredient. Further, the present invention relates to a method for improving a taste of a drink containing a sweetener, which is characterized by using a polymerized polyphenol.

### BACKGROUND ART

Under the background of increasing health consciousness in recent years, the number of products containing a sweetener that is low in calorie but high in sweetness (in the present specification, sometimes referred to as a "high-intensity sweetener") such as aspartame, stevia, acesulfame-K, and sucralose is increasing. While the high-intensity sweetener as described above has such an excellent property that it is several to several thousand times as sweet as sucrose, it has drawbacks that it has a lingering aftertaste and leaves a strange taste and bitterness peculiar to a high-intensity sweetener as an aftertaste owing to its persistent sweetness.

In view of the above, various reports have been released so far regarding a method for improving an aftertaste of a high-intensity sweetener. For example, Patent Document 1 discloses a taste-improving agent to be used for an orally ingestible product comprising a purified product of a black tea extract, which is obtained by subjecting black tea leaves to extraction with water, and then subjecting an extract thus obtained to purification with an adsorbent. The document teaches that the taste-improving agent thus obtained reduces an unpleasant aftertaste caused by a high-intensity sweetener. The document further teaches that the purified product (tea leaf-extract) obtained from the above-described tea leaves, which serves as an active ingredient of the taste-improving agent, are composed of quinic acid, glucose, fructose, and theanine, and the amount of the purified product incorporated is 0.1 to 5 parts by weight with respect to a high-intensity sweetener.

Further, Patent Document 2 discloses a high-intensity sweetener-composition containing a high-intensity sweetener and rutin and/or a rutin derivative, in which sweetness persisting as an aftertaste due to the high-intensity sweetener is reduced. The document teaches that the amount of the above-described rutin and/or rutin derivative incorporated is 0.1 to 20 parts by weight with respect to 100 parts by weight of the high-intensity sweetener.

Patent Document 3 discloses a taste-improving agent for a drink containing a milk component. The document teaches that a clean aftertaste and sharpness in taste can be achieved in a food or drink containing a milk component and a sweetener by adding a polyphenol to the food or drink. Further, the document teaches that the aforementioned polyphenol is one derived from tea, preferably one derived from unfermented tea (green tea) ((+)-catechin, (-)-epicatechin, (+)-gallocatechin, (-)-epigallocatechin, (-)-catechin gallate, (-)-epicatechin gallate, (-)-gallocatechin gallate, and (-)-epigallocatechin gallate).
Patent Document 1: Japanese Patent Public Disclosure No. 2007-14212
Patent Document 2: Japanese Patent Public Disclosure No. 10-146165
Patent Document 3: Japanese Patent Public Disclosure No. 2005-6503

### DISCLOSURE OF THE INVENTION

### PROBLEMS TO BE SOLVED BY THE INVENTION

Although various methods for improving an aftertaste of a sweetener have been proposed as described above, they have not necessarily been satisfactory. Further, besides as a diet sweetener, a high-intensity sweetener is utilized for a number of purposes (for example, for limiting calorie intake in a case of obesity and the like, and for suppressing an increase in glucose level for a disease such as diabetes mellitus) and thus has attained a characteristic as a "low-calorie sweetener." However, a problem is posed that the high-intensity sweetener lacks richness in taste (body, or alternatively referred to as layers of depth in taste).

The present invention aims to improve sharpness in an aftertaste of a food or drink without reducing its peak sweetness, namely, to provide a food or drink in which sweetness persisting as an aftertaste is reduced.
Particularly, the present invention aims to provide a food or drink containing a high-intensity sweetener that gives a palatable quality of sweetness, in which sweetness persisting as an aftertaste is suppressed and a strange taste and bitterness peculiar to a high-intensity sweetener are reduced.

### MEANS FOR SOLVING THE PROBLEMS

The present inventors conducted a thorough research to solve the aforementioned problems. As a result, they found that a food or drink containing a sweetener in which sweetness persisting as an unpalatable aftertaste is suppressed, and which retains a nearly intact degree of sweetness of the sweetener at its peak can be obtained by adding a polymerized polyphenol, particularly, a polymerized catechin, which is a polymerized polyphenol derived from tea, to the food or drink. The present invention was completed based on the above finding.

That is, the present invention relates to a food or drink containing a sweetener and a polymerized polyphenol at such a concentration that a taste of the aforementioned sweetener is improved. Particularly, the present invention relates to a food or drink in which a concentration of the polymerized polyphenol is 0.010 wt.% to 0.100 wt.%.

An embodiment of the present invention relates to a food or drink containing a sweetener and a polymerized polyphenol at such a concentration that a taste of the aforementioned sweetener is improved, in which the polymerized polyphenol is a polymerized catechin.

Further, the present invention relates to a food or drink containing a sweetener and a polymerized polyphenol at such a concentration that a taste of the aforementioned sweetener is improved, in which a degree of sweetness is equal to or greater than 2, preferably equal to or greater than 5, and more preferably equal to or greater than 10.

Further, the present invention relates to a food or drink containing a sweetener and a polymerized polyphenol at such a concentration that a taste of the aforementioned sweetener is improved, particularly to an acidic drink, a carbonated drink, or a low-calorie drink.

Further, the present invention relates to a method for improving a taste of a drink containing a sweetener, which is characterized by using a polymerized polyphenol, particularly a polymerized catechin.

### ADVANTAGES OF THE INVENTION

A food or drink containing a sweetener in which sweetness persisting as an unpalatable aftertaste is suppressed, and which retains a nearly intact degree of sweetness of the sweetener at its peak can be provided by adding a polymerized polyphenol, particularly, a polymerized catechin, which is a polymerized polyphenol derived from tea, to the food or drink.

### BRIEF DESCRIPTION OF THE DRAWING

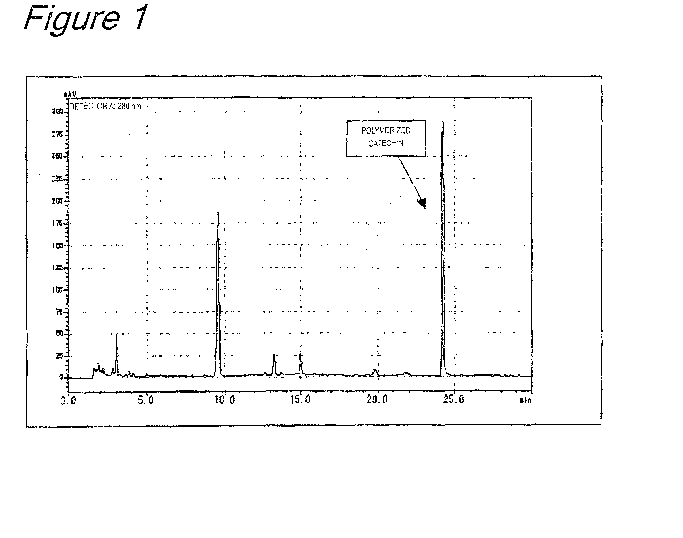

Figure 1 shows an analytical result by HPLC.

### BEST MODE FOR CARRYING OUT THE INVENTION

### (Sweetener)

The present invention is characterized by containing a polymerized polyphenol as an active ingredient, thereby a taste of a sweetener is improved. The improvement in taste of a sweetener in the present invention refers to an effect of suppressing sweetness persisting as an aftertaste (after-sweetness) (in the present specification, sometimes referred to as "sharpness in an aftertaste" and "improvement in aftertaste").

As a sweetener to be used in the present invention, any one of natural sweeteners including sugars such as table sugar, glucose, and maltose, and sugar alcohols such as reduced palatinose, xylitol, and maltitol, peptide-based sweeteners represented by aspartame and alitame, glycoside-based sweeteners represented by stevioside, which is a stevia sweetener, sucrose derivatives represented by sucralose (a compound expressed by C₁₂H₁₉O₈C₁₃, in which a hydroxyl group in the sucrose is replaced by a chlorine), and synthetic sweeteners such as saccharin and acesulfame-K can be used.

Among the above-described sweeteners, a high-intensity sweetener having a strong sweetness compared to sugar (for example, 100 or more times as sweet as sugar) is preferably used. As a high-intensity sweetener, a natural sweetener and a synthetic sweetener can be used. The high-intensity sweetener includes, for example, peptide-based sweeteners such as aspartame and alitame; glycoside-based sweeteners such as stevia (including a stevia extract, enzyme-treated stevia obtained by adding glucose to stevia by enzyme treatment, and rebaudioside A, which has the best quality of sweetness among sweet components of stevia) and a Glycyrrhiza extract; sucrose derivatives such as sucralose; synthetic sweeteners such as acesulfame-K and saccharin.
Among them, a particularly preferable high-intensity sweetener may be aspartame, a stevia sweetener, sucralose, acesulfame-K, and alitame. Also, a sweetener to be used in the present invention may be a sweetener that has not been approved in Japan as of September, 2007, such as neotame, and a sweetener yet-to-be developed newly in the future. The sweetener to be used in the present invention can be used alone or a plurality of them can be used in combination. When the sweetener described above is used, besides a suppressive effect on the after-sweetness is remarkably exerted, a strange taste and bitterness peculiar to the high-intensity sweetener can be reduced; hence, unfavorable quality of taste of a food or drink containing the high-intensity sweetener can be considerably improved.

### (Polymerized polyphenol)

A polyphenol is one of the phytochemicals, which are substances derived from a plant, and also a collective term for compounds having two or more phenolic hydroxyl groups per molecule. Broadly, a non-polymerized polyphenol having a molecular weight of 1,000 or less and a polymerized polyphenol in which two or more non-polymerized polyphenols are bound together exist for a polyphenol. Namely, a polymerized polyphenol to be used in the present invention is one in which two or more non-polymerized polyphenols are bound together. A polymerized polyphenol is also generally called tannin. A non-polymerized polyphenol is represented by flavonoids (including a compound having flavon, flavonol, flavanone, flavanonol, isoflavon, anthocyanin, flavanol, chalcone, and aurone as a basic skeleton), chlorogenic acid, gallic acid, ellagic acid, and the like. On the other hand, a polymerized polyphenol is one in which two or more non-polymerized polyphenols are bound together, and is broadly classified into a condensed polyphenol in which non-polymerized polyphenols are polymerized via a carbon-carbon bond and a hydrolyzed polyphenol in which non-polymerized polyphenols are polymerized via an ester bond. A condensed polyphenol is represented by proanthocyanidins, and a hydrolyzed polyphenol is represented by gallotannin and ellagitannin, respectively.

Any one of the above-described polymerized polyphenols can be used as the polymerized polyphenol of the present invention. The polymerized polyphenol of the present invention can be exemplified by various polymerized polyphenols on the market, for example, a pine bark polymerized polyphenol (FLAVANGENOL (trademark): Toyo Shinyaku, Co., Ltd.), a grape seed polyphenol (Kikkoman Corporation), a cacao polyphenol (Meiji Seika Kaisha, Ltd.), and the like, and further exemplified by the polymerized polyphenol of the present invention can be exemplified by a tea polymerized polyphenol (in the present specification, may be also referred to as a "polymerized catechin") such as an oolong tea polymerized polyphenol described in WO2005/077384 and a black tea polymerized polyphenol produced in a similar fashion to the oolong tea polymerized polyphenol.

Among the above-described polymerized polyphenols, it is particularly preferable to use a tea polymerized polyphenol (also referred to as a "polymerized catechin"). When a polymerized catechin is used, it not only remarkably exerts an aftertaste-improving effect such as a suppressive effect on an after-sweetness and an effect of reducing a strange taste and bitterness peculiar to a high-intensity sweetener but also adds body (richness (also referred to as layers of depth in taste) and a voluminous feel) to a low-calorie (including non-calorie) food or drink. Hence, a taste of the food or drink can be further improved. Besides as a diet sweetener, a high-intensity sweetener is utilized for a number of purposes (for example, for limiting calorie intake in a case of obesity and the like, and for suppressing an increase in glucose level for a disease such as diabetes mellitus) and thus has attained a characteristic as a "low-calorie sweetener." However, a problem is occasionally posed that the high-intensity sweetener lacks body. The present invention is also useful in terms of being able to solve a lack of body in a low-calorie (including non-calorie) food or drink containing the above-described high-intensity sweetener.

At this point, it is to be noted that a polymerized catechin is a component that peaks at the same elution time as theaflavin (a product of Kurita Research Center, referential elution time: 24 minutes) as analyzed by HPLC under the following conditions (refer to Figure 1).
- Column: TSK-gel ODS-80TsQA (4.6 mm in the diameter×150 mm, Tosoh Corporation)
- Mobile phase:A: water:acetonitrile:trifluoroacetic acid=900:100:0.5
   B: water:acetonitrile:trifluoroacetic
   acid=200:800:0.5
- Flow rate: 1.0 ml/min
- Column temperature: 40°C
- Gradient conditions: 0% of the liquid B from initiation of the analysis to 5 minutes after initiation
   8% of the liquid B from 5 minutes to 11 minutes
   10% of the liquid B from 11 minutes to 21 minutes
   100% of the liquid B from 21 minutes to 22 minutes
   Keep 100% of the liquid B from 22 minutes to 30 minutes
   0% of the liquid B from 30 minutes to 31 minutes
- Detection: A 280 nm (data collection time was 30 minutes), a peak area was used for quantification.
- Input amount: 10 µL
- Reference material: Oolonghomobisflavan B (abbreviated as OHBF-B)
   The amount of polymerized catechin can be obtained by producing a calibration curve using OHBF-B as a reference material. As an OHBF-B as a reference material, for example, one synthesized by the method described in Chem. Pharm. Bull 37 (12), 3255-3563 (1989) and in Example 3 in Japanese Patent Public Disclosure No. 2005-336117 (preferably, one that is purified to the purity of equal to or greater than 98%) and one isolated from tea leaves can be used.

The polymerized catechin can be exemplified by one having a structure in which a plurality of non-polymerized catechins ((+)-catechin, (-)-epicatechin, (+)-gallocatechin, (-)-epigallocatechin, (-)-catechin gallate, (-)-epicatechin gallate, (-)-gallocatechin gallate, and (-)-epigallocatechin gallate) are connected by a tea-derived enzyme, an enzyme, light, and the like. Specifically, a polymerized polyphenol called by a common name of thearubigin and the like, an epigallocatechin gallate dimmer represented by the formula (1),

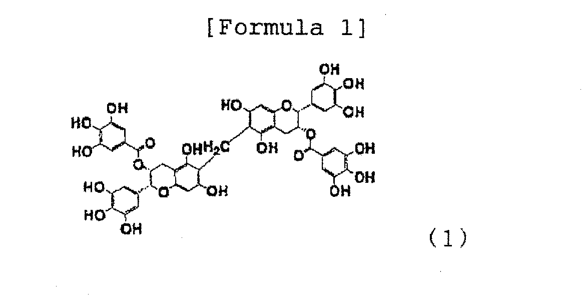

an epigallocatechin gallate trimer represented by the formula (2),

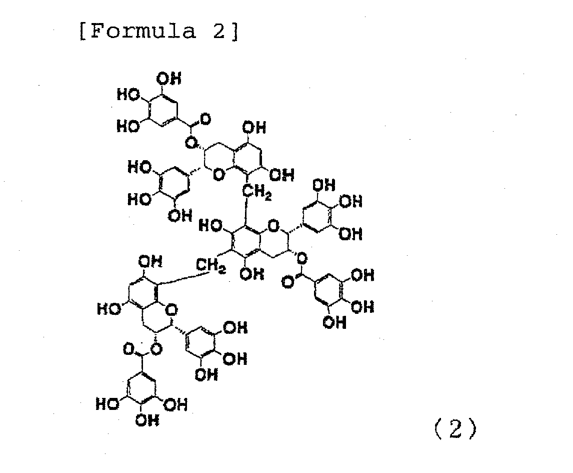

an epigallocatechin dimer represented by the formula (3),

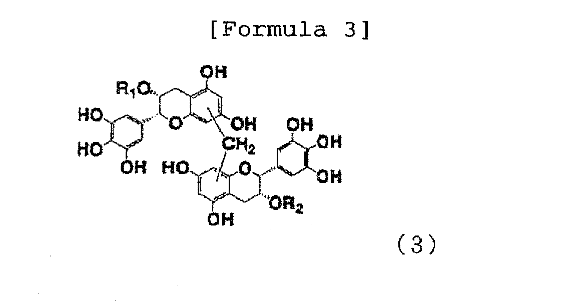

(wherein, R1 and R2 each independently represent H or a galloyl group) an epigallocatechin trimmer represented by the formula (4)

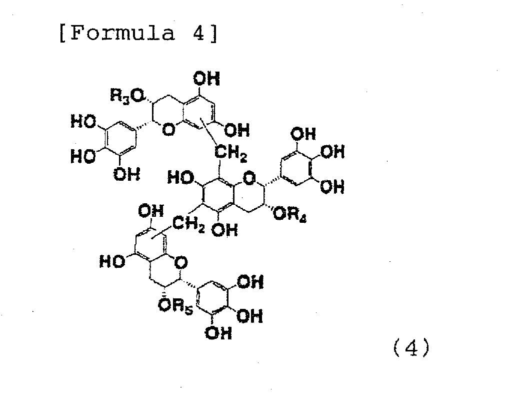

and an oolong theanine-3'-O-gallate represented by the formula (5),

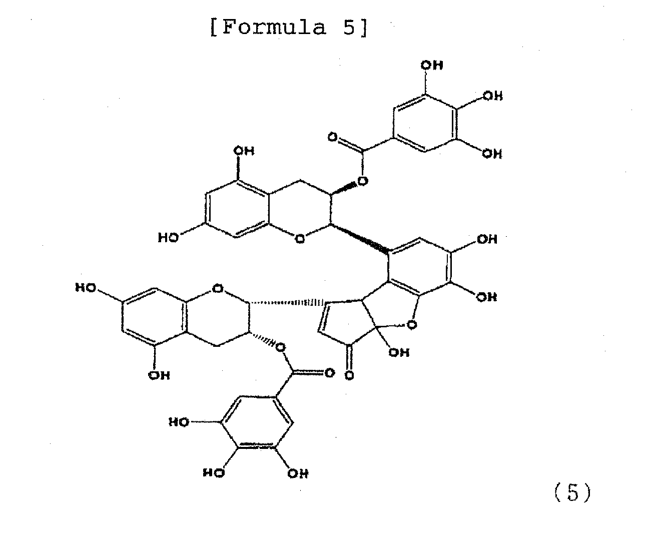

may be used as the polymerized polyphenol.

The polymerized catechin of the present invention can be obtained by extracting tea leaves with a solvent. From among green tea as unfermented tea, oolong tea as semi-fermented tea, and black tea as fermented tea, one kind or two or more kinds is/are used as tea leaves as a raw material. Among them, semi-unfermented tea or fermented tea containing a polymerized catechin in abundance may be used. Water or a hot water, methanol, ethanol, isopropanol, ethyl acetate, and the like are used alone or in admixture of two or more kinds as an extraction solvent. While a solvent extract of tea leaves obtained as above may be used directly, a concentrated solvent extract or a purified solvent extract, namely, a solvent extract of tea leaves from which components other than a polymerized catechin are selectively removed to increase the content ratio of the polymerized catechin, may be used.

Generally, because a non-polymerized catechin and caffeine has a bitter and astringent taste, when the large amount of these substances is incorporated, a taste of a food or drink itself may be impaired. Accordingly, as the polymerized catechin of the present invention, a solvent extract of tea leaves from which a non-polymerized catechin and/or caffeine are/is selectively removed as described above is preferably used. The above-described solvent extract from which a non-polymerized catechin and/or caffeine are/is selectively removed is exemplified by one containing a polymerized catechin at four or more times the non-polymerized catechin in terms of concentration as described in WO2005/077384.

The polymerized polyphenol to be used in the present invention may be in the form of liquid or powder as prepared by spray drying, frost shattering, and the like.

It is to be noted that a non-polymerized catechin refers to a non-polymerized monomer of catechins ((+)-catechin, (-)-epicatechin, (+)-gallocatechin, (-)-epigallocatechin, (-)-catechin gallate, (-)-epicatechin gallate, (-)-gallocatechin gallate, and (-)-epigallocatechin gallate).

### (Food or drink)

The present invention relates to a food or drink containing the aforementioned sweetener and the aforementioned polymerized polyphenol at such a concentration that a taste of the sweetener is improved.

While the amount of polymerized polyphenol to be incorporated the food or drink of the present invention may be appropriately selected depending on the quality of sweetness and the degree of sweetness expected in a food or drink in which the polymerized polyphenol is to be used, a kind of the polymerized polyphenol to be used, and the like, the amount is usually 0.010 wt.% to 0.100 wt.% as a polymerized polyphenol with respect to the whole food or drink. An improvement in taste of a sweetener, particularly a sufficient suppressive effect on after-sweetness cannot be obtained with a concentration of the polymerized polyphenol of less than 0.010 wt.%. On the other hand, even when more than 0.100 wt.% of the polymerized polyphenol is incorporated, it is economically disadvantageous because no further efficacy in the taste-improving effect can be expected. Further, depending on a kind of the polymerized polyphenol, reduction in the peak of the degree of sweetness of a sweetener might be caused due to a factor such as astringency derived from the polymerized polyphenol.

When a high-intensity sweetener is used as a sweetener for the food or drink of the present invention, although the amount to be incorporated varies depending on a kind of the high-intensity sweetener, it is generally equal to or less than 0.2 g, preferably 0.1 g to 0.001 g per 100 mL of the drink. The reason for the above is that when the amount of high-intensity sweetener exceeds 0.2 g per 100 mL of the drink, sweetness becomes too intense, and accordingly, the excessively large amount of the polymerized catechin needs to be added to improve the quality of the sweetness, which is not favorable. Specifically, the amount to be mixed is preferably 0.001 g to 0.03 g per 100 mL in the case of sucralose, preferably 0.001 g to 0.1 g per 100 mL in the case of stevia, preferably 0.001 g to 0.1 g per 100 mL in the case of acesulfame-K, and preferably 0.001 g to 0.1 g per 100 mL in the case of aspartame.

When a high-intensity sweetener is used as a sweetener, a favorable taste-improving effect can be obtained by combining 3 to 1000 parts by weight, preferably 6 to 600 parts by weight of a polymerized polyphenol with respect to 100 parts by weight of the high-intensity sweetener, in terms of the amount of the polymerized polyphenol to be incorporated. However, the optimal combination ratio arbitrarily varies depending on a quality and a degree of sweetness of the sweetener.

Although the food or drink of the present invention may be any food that is expected to provide fresh sweetness as an aftertaste, an improvement in taste of a sweetener, particular an effect of effectively suppressing persisting sweetness is exerted in a food or drink having a degree of sweetness of equal to or greater than 2, preferably equal to or greater than 5, and more preferably equal to or greater than 10. Further, while no particular limitation is imposed on the form of the food or drink, it is useful to be provided as a drink in which an after-sweetness property is emphasized, particularly, an acidic drink and a carbonated drink in which such an unfavorable after-sweetness is emphatically sensed.
At this point, the degree of sweetness refers to a relative ratio of sweetness obtained by setting the sweetness of sugar as one. The degree of sweetness of a food or drink can be obtained by converting the amount of each sweet component (weight concentration) contained in the food or drink to the corresponding amount of sugar based on a relative ratio of sweetness of the sweet component obtained by setting the sweetness of sugar as one, and then summing up the amount of all the sweet components, being converted into the sweetness of sugar, contained in the food or drink (including a sweet component derived from fruit juice and the like). It is to be noted that a relative ratio of sweetness of each kind of sweet component obtained by setting the sweetness of sugar as one can be obtained by a publicly available sugar sweetness-conversion table and the like (for example, "beverage term dictionary", page 11, provided by Beverage Japan, Inc).

At this point, an acidic drink refers to a drink having pH of 2.0 to 4.5, preferably pH of 2.5 to 4.5. Because strong acidity is felt with pH of less than 2.5 while lingering sweetness is felt with pH of more than 4.5, these conditions are not favorable.

As described above, when a high-intensity sweetener is used as a sweetener and a polymerized catechin is used as a polymerized polyphenol, richness can be added while an improvement in aftertaste is attained. A high-intensity sweetener is widely used in a diet food and the like (including a drink). Particularly, in a field of drinks, which are consumed in a large quantity, a high-intensity sweetener is used in a low-calorie drink such as a calorie-off drink (containing less than 20 kcal per 100 mL of the drink) and a non-calorie drink (containing less than 5 kcal per 100 mL of the drink), and also in various drinks in accordance with a concept of sugar-free. The food or drink of the present invention containing a high-intensity sweetener and a polymerized catechin as described above can add body when prepared as the above-described low-calorie (including non-calorie) drinks; therefore, low-calorie (including non-calorie) drinks are provided as a preferable embodiment of the present invention. At this point, a drink to be prepared as being low in calorie may be a carbonated drink such as cola and ramune (lemon-lime flavored soda), a sport drink, a fruit juice drink, a milk-based drink, a tea-based drink, and the like. Particularly, a carbonated drink, which causes a problem of obesity when consumed in abundance, can be targeted as a drink to be prepared as being low in calorie.

A "carbonated drink" in the present invention refers to one obtained by adding, as needed, a fruit juice, a plant extract, a milk product, flavor, and the like to an aqueous solution of a sweetener, and then filling it in a container with a carbon dioxide gas injected thereinto. In a carbonated drink, stimulation felt inside a mouth and a throat (mouth feel and feeling attained during and after swallowing) achieved by a right amount of effervescence nurture a refreshing feeling during and after drinking, thereby light flavor and a clean, refreshing sensation are created. However, when a low-calorie carbonated drink is provided using a high-intensity sweetener, refreshing sensation is impaired owing to its poor aftertaste, by which palatability of the carbonated drink is reduced. In the carbonated drink of the present invention containing a polymerized catechin, however, an aftertaste of a high-intensity sweetener is improved, namely, after-sweetness is suppressed, while a strange taste and bitterness peculiar to the high-intensity sweetener are reduced, by which sharpness in an aftertaste is improved, and further, body is added to the carbonated drink; thus, a low-calorie drink having flavor equivalent to a drink made with sucrose, known as a good quality sweetener, is provided.

Further, the carbonated drink of the present invention containing a polymerized catechin also exhibits an excellent effect that a bubbling feeling and a flavor release are improved. In the present invention, when a term "bubble" is used pertaining to a carbonated drink, it refers to bubbles generated in the drink liquid, except a special case. A so-called high gas-pressure carbonated drink, in which a carbon dioxide gas is injected so that the gas pressure in a container is in a range of 2.0 kg/cm² to 5.0 kg/cm², preferably 2.5 kg/cm² to 4.5 kgicm², provides refreshing sensation with bubbles. However, generated bubbles are coarse and disappear quickly, and thus it was not satisfactory in terms of fresh stimulation expected in a high gas-pressure carbonated drink. Also, there are cases in which, with regard to a carbonated drink filled in a container having a resealable cap such as a PET bottle and a bottle can (also simply called a recappable container), a content liquid (carbonated drink) cannot be finished right after opening and thus recapped, and then is consumed again several hours to several days after recapping. In the case in which a once-opened carbonated drink is consumed after some time, problems are posed that refreshing sensation is reduced due to deteriorated balance between sweetness and sourness that are caused along with reduction in the gas pressure, and refreshing sensation and stimulation expected in a carbonated drink are reduced due to failure in maintenance of bubbling feeling. Particularly, a large number of high gas-pressure carbonated drink is designed to contain an increased sweetener to prevent stimulation of carbonation from standing out because a stimulative taste and a carbonated taste are enhanced due to the high gas pressure (a degree of sweetness is 8 to 14, preferably 8 to 12, and more preferably 9 to 11). In the above case, problems are posed that sweetness stands out along with a decrease in the gas pressure after opening, unfavorable flavor peculiar to a high-intensity sweetener becomes prominent, and a flavor release is impaired. However, in the carbonated drink of the present invention containing a polymerized catechin, bubbles generated by the high gas pressure are finely formed synergistically by the polymerized catechin, and a flavor release is improved owing to lasting bubbles. Thus, refreshing sensation and appropriate stimulation expected in a high gas-pressure carbonated drink can be realized. Further, when the carbonated drink of the present invention containing a polymerized catechin is provided as a carbonated drink filled in a recappable container that allows multiple times of consumption of the drink after opening, it is served as a carbonated drink relatively capable of maintaining flavor and properties of bubbles attained right after opening, namely, a carbonated drink that maintains drinkability attained right after opening.

It is to be noted that when a term "gas pressure" is used in the present invention pertaining to a carbonated drink filled in a container, it refers to gas pressure in the container, except a special case. Measurement of the gas pressure is well known to a person skilled in the art. Specifically, it is performed by fixing a sample of 20°C in a gas pressure meter, after which a cock in the gas pressure meter is opened once to release the gas. Subsequently, the cock is closed back and the gas pressure meter is swayed, and when an indicator needle has reached a certain position, a value indicated by the needle is read off.

Based on the foregoing description, a preferable embodiment of the food or drink of the present invention is exemplified by drinks as shown below.
(1) An acidic drink having;
   (a) a sweetener (a degree of sweetness of equal to or greater than 2, preferably equal to or greater than 5, and more preferably equal to or greater than 10);
   (b) 0.010 wt.% to 0.100 wt.% of a polymerized catechin with respect to the whole drink; and
   (c) pH of 2.0 to 4.5 (preferably 2.5 to 4.5). (1') An acidic drink (low-calorie drink) having;

   (a) a high-intensity sweetener (a degree of sweetness of equal to or greater than 2, preferably equal to or greater than 5, and more preferably equal to or greater than 10);
   (b) 0.010 wt.% to 0.100 wt.% of a polymerized catechin with respect to the whole drink;
   (c) pH of 2.0 to 4.5 (preferably 2.5 to 4.5); and
   (d) less than 20 kcal per 100 mL of the drink (preferably less than 5 kcal per 100 mL of the drink).
(2) A carbonated drink having;
   (a) a sweetener (a degree of sweetness of 8 to 14, preferably 8 to 12, and more preferably 9 to 11);
   (b) 0.010 wt.% to 0.100 wt.% of a polymerized catechin with respect to the whole drink;
   (c) a gas pressure inside a container of 2.0 kg/cm² to 5.0 kg/cm² (preferably 2.5 kg/cm² to 4.5 kg/cm²); that is
   (d) filled in a container. (2') A carbonated drink (low-calorie drink) having;

   (a) a high-intensity sweetener (a degree of sweetness of 8 to 14, preferably 8 to 12, and more preferably 9 to 11);
   (b) 0.010 wt.% to 0.100 wt.% of a polymerized catechin with respect to the whole drink;
   (c) a gas pressure inside a container of 2.0 kg/cm² to 5.0 kg/cm² (preferably 2.5 kg/cm² to 4.5 kg/cm²); and
   (d) less than 20 kcal per 100 mL of the drink (preferably less than 5 kcal per 100 mL of the drink); that is
   (e) filled in a container.

### EXAMPLES

The present invention is described in more detail hereinbelow with Examples. However, the present invention is not limited by these Examples.

### <Production Example 1 (production of an oolong tea polymerized polyphenol (polymerized catechin))>

Using 7800 kg of a sodium bicarbonate liquid, which was prepared by adding 0.15 wt.% of sodium bicarbonate to hot water (95°C), 600 kg of oolong tea leaves were subjected to extraction, thereby approximately 7000 kg of an oolong tea extract was obtained. While keeping temperature of the liquid at 60°C to 65°C, the liquid was flowed through 400 kg of granular activated carbon (a product of Kuraray, Co., Ltd., GW-H32/60) to remove a non-polymerized catechin and caffeine. The flow-through liquid thus obtained (liquid having been treated with activated carbon) was concentrated under reduced pressure to give approximately 900 kg of concentrated oolong tea essence containing a polymerized catechin having a Brix value of 11 (hereinafter called essence A). Concentrations of polymerized catechin, non-polymerized catechin, and caffeine in the essence A thus obtained were measured by HPLC under the following conditions. As a result, a polymerized catechin, a non-polymerized catechin, and caffeine were present in the amounts of 12000 ppm, 800 ppm, and 20 ppm, respectively, based on weight.

### HPLC conditions:

- Column: TSK-gel ODS-80TsQA (4.6 mm in the diameter×150 mm, Tosoh Corporation)
- Mobile phase:A: water:acetonitrile:trifluoroacetic acid=900:100:0.5
   B: water:acetonitrile:trifluoroacetic
   acid=200:800:0.5
- Flow rate: 1.0 ml/min
- Column temperature: 40°C
- Gradient conditions: 0% of the liquid B from initiation of the analysis to 5 minutes after initiation
   8% of the liquid B from 5 minutes to 11 minutes
   10% of the liquid B from 11 minutes to 21 minutes
   100% of the liquid B from 21 minutes to 22 minutes
   Keep 100% of the liquid B from 22 minutes to 30 minutes
   0% of the liquid B from 30 minutes to 31 minutes
- Detection: A 280 nm
- Reference material: Oolonghomobisflavan B (OHBF-B)
- Retention time of a polymerized catechin: A peak observed at approximately 25 minutes coincided with the peak of theaflavin.

Further, as a result of a component analysis of the essence A, the presence of dimers and trimers of epigallocatechin gallate, dimers and trimers of epigallocatechin, and oolong theanine-3'-O-gallates represented by the following formulas (1) to (5) was confirmed.

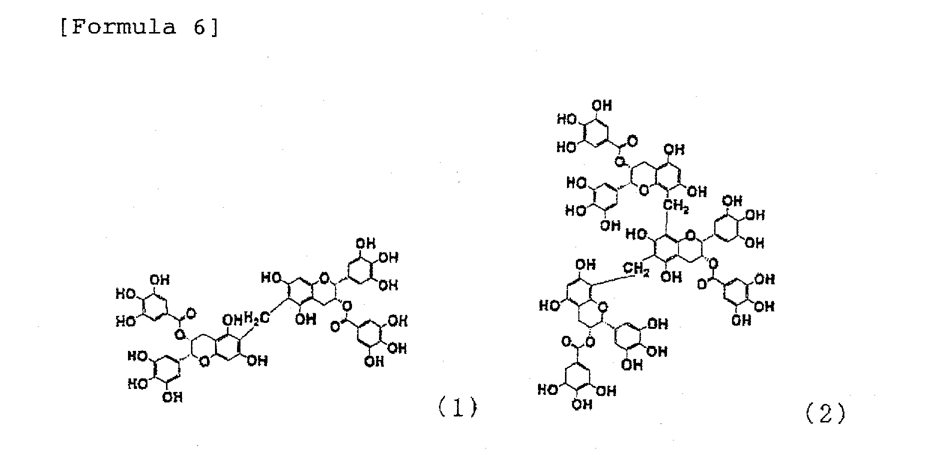

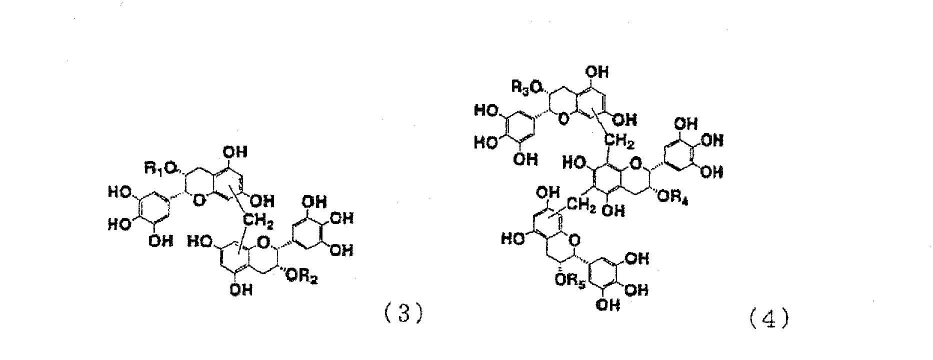

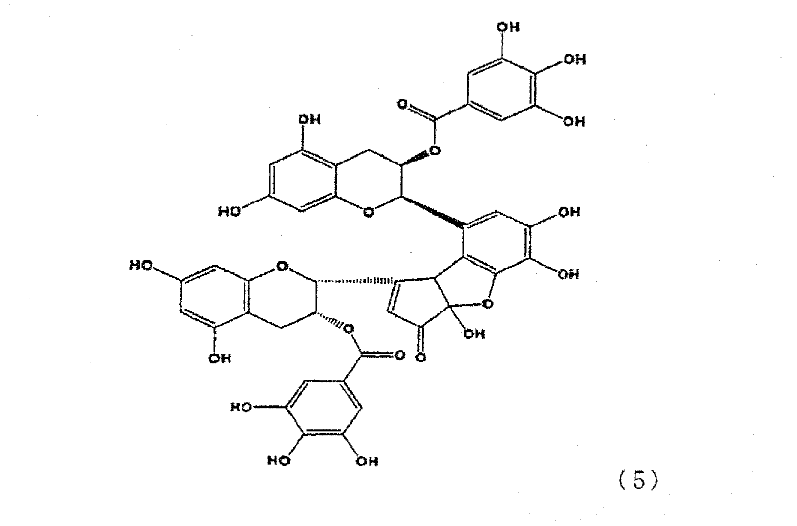

### <Production Example 2 (production of a black tea polymerized polyphenol (polymerized catechin))>

Hot water (equal to or more than 90°C) (2000 g) was added to 100 g of black tea leaves and the resulting solution was left standing for one hour (equal to or more than 90°C), thereby a black tea extract was obtained. The extract thus obtained was cooled and centrifuged (6000 rpm, 5 minutes) to remove insoluble substances. Subsequently, the resulting liquid was treated with activated carbon similarly to Production Example 1 to give a black tea extract containing a polymerized catechin (Brix value of 2). The extract thus obtained was concentrated under reduced pressure to produce concentrated black tea essence containing a polymerized catechin (essence B). As a result of an analysis by HPLC similar to Production Example 1, a polymerized catechin, a non-polymerized catechin, and caffeine were present in the amounts of 2000 ppm, 200 ppm, and 5 ppm, respectively, based on weight.

### <Example 1 (Aftertaste-improving effect of a polymerized catechin on a high-intensity sweetener-1)>

As a sweetener, high-intensity sweeteners of sucralose (San-Ei Gen F.F.I., Inc.), aspartame (PalSweet Diet: Ajinomoto, Co., Inc.), and acesulfame-K (Sunett: Nutrinova Japan, Ltd.) were used.

Using the above-described high-intensity sweeteners, aqueous solutions of the sweeteners having degrees of sweetness corresponding to 0.2, 1, 5, 10, and 15 as determined by setting the degree of sweetness obtained with 1 wt.% of sucrose as 1, were prepared. To these solutions, 0.045 wt.% of trisodium citrate and 0.055 wt.% of anhydrous citric acid were added, thereby aqueous solutions of high-intensity sweeteners having pH 3.5 were prepared. The mount of each sweetener incorporated is as follows.

**[Table 1]**

| | Degree of sweetness 0.2 | Degree of sweetness 1 | Degree of sweetness 5 | Degree of sweetness 10 | Degree of sweetness 15 |
|---|---|---|---|---|---|
| Sucralose | 0.00045 | 0.002 | 0.011 | 0.022 | 0.033 |
| Aspartame | 0.001 | 0.005 | 0.025 | 0.05 | 0.075 |
| Acesulfame-K | 0.001 | 0.005 | 0.025 | 0.05 | 0.075 |
| (Unit: wt.%) | | | | | |

The essence A produced in Production Example 1 was added to the above aqueous solutions having various concentrations of the high-intensity sweeteners so that a concentration of polymerized catechin was 300 ppm (0.03 wt.%) based on weight. Using the above aqueous solutions of the high-intensity sweeteners without the essence A as a control, five panelists evaluated as to which aqueous solution of the high-intensity sweetener was organoleptically preferable in regard to an unfavorable aftertaste peculiar to a high-intensity sweetener (sweetness and a lingering rough taste).

The results thus obtained are shown in Table 2. Table 2 shows the number of the panelists who evaluated the aqueous solution containing the essence A (polymerized catechin) as having the better aftertaste. In any kind of the high-intensity sweetener used, the aftertaste was improved with addition of the essence A (polymerized catechin), and further, such an effect was particularly noted in the degree of sweetness of 1 to 15 (0.002 wt.% to 0.033 wt.%) in the case of sucralose, the degree of sweetness of 0.2 to 15 (0.001 wt.% to 0.075 wt.%) in the case of aspartame, and the degree of sweetness of 1 to 10 (0.005 wt.% to 0.075 wt.%) in the case of acesulfame-K.

Furthermore, all the panelists evaluated the aqueous solution of the high-intensity sweetener containing the essence A (a non-calorie drink) as more favorable with a richer body than the control (without the essence A).

**[Table 2]**

| | | | | | | |
|---|---|---|---|---|---|---|
| | 0 | | | | | |
| Degree of sweetness | | 0.2 | 1 | 5 | 10 | 15 |
| | (Control) | | | | | |
| Sucralose | - | 0 | 3 | 5 | 5 | 5 |
| Aspartame | - | 4 | 5 | 5 | 5 | 5 |
| Acesulfame-K | - | 2 | 5 | 5 | 5 | 1 |

### <Example 2 (Aftertaste-improving effect of a polymerized catechin on a high-intensity sweetener-2)>

Aqueous solutions of aspartame having degrees of sweetness corresponding to 5 and 10, as determined by setting the degree of sweetness obtained with 1 wt.% of sucrose as 1, were prepared. That is, to aqueous solutions containing 0.025 wt.% and 0.05 wt.% of aspartame, 0.045 wt.% of trisodium citrate and 0.055 wt.% of anhydrous citric acid were added, thereby aqueous solutions of aspartame having pH 3.5 were prepared. To these solutions, the essence A was added so that a polymerized catechin was present in the amount of 0 ppm to 2000 ppm (0 wt.% to 0.2 wt.%) based on weight. Using the above aqueous solutions of aspartame without the essence A as a control, five panelists evaluated as to which aqueous solution of aspartame was organoleptically preferable in regard to an unfavorable aftertaste peculiar to aspartame (sweetness and a lingering rough taste).

The results thus obtained are shown in Table 3. Table 3 shows the number of the panelists who evaluated the aqueous solution containing the essence A as having the better aftertaste. In either case of the degree of sweetness of 5 or 10, the aftertaste was improved with addition of 100 ppm to 1000 ppm (0.01 wt.% to 0.1 wt.%) of the polymerized catechin. In the case in which 2000 ppm (0.2 wt.%) of the polymerized catechin was added, a taste derived from the polymerized catechin was felt, and further, it was felt that sweetness was reduced compared with the control, namely, the degree of sweetness at its peak was reduced.

**[Table 3]**

| | | | | | | | |
|---|---|---|---|---|---|---|---|
| Polymerized | | | | | | | |
| | 0 | | | | | | |
| catechins | | 100 | 200 | 300 | 500 | 1000 | 2000 |
| | (Control) | | | | | | |
| (ppm) | | | | | | | |
| Degree of | | | | | | | |
| | - | 5 | 5 | 5 | 5 | 2 | 0 |
| sweetness 5 | | | | | | | |
| Degree of | | | | | | | |
| | - | 5 | 5 | 5 | 5 | 3 | 0 |
| sweetness 10 | | | | | | | |

Further, a storage test was conducted with respect to aqueous solutions of aspartame containing 0 ppm (control), 100 ppm, 200 ppm, 300 ppm, and 500 ppm of the polymerized catechin prepared in Production Example 2 (non-calorie acidic drinks). The storage was conducted at 45°C for one month. Aspartame is known to cause reduction in its sweetness due to degradation during storage in an acidic environment. However, reduction in sweetness was suppressed to a greater extent in the acidic drinks containing the polymerized catechin than in the control, and all the panelist evaluated that sweetness was maintained to a greater extent in the drinks containing 200 ppm or more of the polymerized catechin than in the control. Storage at 45°C for one month is known to be equivalent to storage at ambient temperature for 10 month. Based on the above results, it was suggested that the drinks of the present invention containing the polymerized catechin, particularly the acidic drinks containing aspartame would exert excellent effects such as an improvement in aftertaste (suppression of after-sweetness and alleviation of bitterness peculiar to aspartame) and suppression of reduction in sweetness during storage.

### <Example 3 (Aftertaste-improving effect of a polymerized catechin on a high-intensity sweetener-3)>

To aqueous solutions containing 0.04 wt.% of aspartame, 0.01 wt.% of acesulfame-K, 0.045 wt.% of trisodium citrate, and 0.055 wt.% of anhydrous citric acid, the essence A was added so that a concentration of polymerized catechin was 300 ppm (0.03 wt.%) based on weight. Then, a carbon dioxide gas was injected by an ordinary method so that a gas pressure in a container was 3.0 kgf/cm², thereby a non-calorie carbonated drink having pH 4.0 was prepared. Also, as a Comparative Example, a carbonated drink was prepared in a similar fashion except that the essence A (polymerized catechin) was not added. Five panelists evaluated an unfavorable aftertaste peculiar to a high-intensity sweetener (sweetness and a lingering rough taste) in the presence or absence of the polymerized catechin.

Table 4 shows the number of the panelists who evaluated either one of the drinks as favorable. Five out of five panelists responded that the drink containing the polymerized catechin was favorable, and all of the panelists responded that the drink had a good aftertaste. Also, all of the panelists responded that the carbonated drink containing the essence A (polymerized catechin) provided fine bubbles and a supple mouth feel with persisting bubbles, and that the drink was favorable as well in terms of refreshing sensation and stimulation.

**[Table 4]**

| Polymerized catechins | Absent | Present |
|---|---|---|
| Aspartame | | |
| + Acesulfame-K | 0 | 5 |
| (Degree of sweetness 10) | | |

### <Example 4 (Aftertaste-improving effect of a polymerized catechin on a sweetener)>

As a sweetener, commercially available sugar (sucrose), stevia (SK sweet; Nippon Paper Chemicals Co., Ltd.), erythritol (Mitsubishi-Kagaku Foods Corp.), xylitol, (Danisco Japan, Ltd.), trehalose (Hayashibara Shoji, Inc.), and maltitol (Amalty; Towa-Kasei Co., Ltd.) were used. Aqueous solutions containing sugar acids having a degree of sweetness of 10 were prepared according to the compositions shown in Table 5, and the essence A was added to each solution so that a concentration of polymerized catechin was 300 ppm (0.03 wt.%). Also, the aqueous solution without the essence A (polymerized catechin) was prepared as a control. Each aqueous solution containing a sugar acid was non-calorie except that 4-1 had 40 kcal/100 mL and 4-5 had 88.8 kcal/100 mL. Five panelists evaluated an aftertaste of a sweetener (persistence of sweetness; sharpness in the aftertaste) in the presence or absence of the polymerized catechin. Further, similar evaluation was conducted on aqueous solutions containing sugar acids having a degree of sweetness of 5 (compositions were the same except that the sweetener in Table 5 was reduced by half).

**[Table 5]**

| | Com. Ex. | Ex. | Com. Ex. | Ex. | Com. Ex. | Ex. | Com. Ex. | Ex. | Com. Ex. | Ex. | Com. Ex. | Ex. | |
|---|---|---|---|---|---|---|---|---|---|---|---|---|---|
| | 4-1 | 4-1 | 4-2 | 4-2 | 4-3 | 4-3 | 4-4 | 4-4 | 4-5 | 4-5 | 4-6 | 4-6 | |
| Sodium citrate | 0.5 | 0.5 | 0.5 | 0.5 | 0.5 | 0.5 | 0.5 | 0.5 | 0.5 | 0.5 | 0.5 | 0.5 | g |
| Anhydrous citric acid | 0.55 | 0.55 | 0.55 | 0.55 | 0.55 | 0.55 | 0.55 | 0.55 | 0.55 | 0.55 | 0.55 | 0.55 | g |
| Polymerized catechins | 0 | 300 | 0 | 300 | 0 | 300 | 0 | 300 | 0 | 300 | 0 | 300 | ppm |
| Sugar | 100 | 100 | - | - | - | - | - | - | - | - | - | - | g |
| Stevia | - | - | 5 | 5 | - | - | - | - | - | - | - | - | g |
| Erythritol | - | - | - | - | 143 | 143 | - | - | - | - | - | - | g |
| Xylitol | - | - | - | - | - | - | 100 | 100 | - | - | - | - | g |
| Trehalose | - | - | - | - | - | - | - | - | 222 | 222 | - | - | g |
| Maltitol | - | - | - | - | - | - | - | - | - | - | 133 | 133 | g |
| Total amount | 1000 | 1000 | 1000 | 1000 | 1000 | 1000 | 1000 | 1000 | 1000 | 1000 | 1000 | 1000 | . |

The results thus obtained are shown in Table 6. Table 6 shows the number of the panelists who evaluated the aqueous solution containing the essence A (polymerized catechin) as having a better aftertaste. Irrespective of the degree of sweetness and a kind of sweetener used, it was confirmed that sharpness in an aftertaste was improved by addition of the essence A (polymerized catechin).

Furthermore, the panelists evaluated the non-calorie drinks made with stevia, erythritol, xylitol, and maltitol as a sweetener as favorable drinks, assessing that body was added to the above drinks by addition of the essence A (polymerized catechin), and the drinks attained good quality sweetness equivalent to a drink made with sugar, namely, richness in the taste and sharpness in the aftertaste (free from after-sweetness).

**[Table 6]**

| | Degree of sweetness 5 | Degree of sweetness 10 |
|---|---|---|
| Sugar | 4 | 4 |
| Stevia | 5 | 5 |
| Erythritol | 4 | 4 |
| Xylitol | 3 | 3 |
| Trehalose | 3 | 3 |
| Maltitol | 3 | 3 |

### <Example 5 (Aftertaste-improving effect on a high-intensity sweetener depending on differences in the kinds of polymerized catechins)>

As a polymerized catechin, the essence A (oolong tea polymerized polyphenol) and the essence B (black tea polymerized polyphenol) were used. Also, as a polymerized polyphenol other than a polymerized catechin, a pine bark polymerized polyphenol (FLAVANGENOL: Toyo Shinyaku, Co., Ltd.) and a cacao polyphenol (Meiji Seika Kaisha, Ltd.) were used.

To aqueous solutions of aspartame having degrees of sweetness of 5 (0.025 wt.%) and 10 (0.05 wt.%), 0.045 wt.% of trisodium citrate and 0.055 wt.% of anhydrous citric acid were added, thereby aqueous solutions of aspartame having pH 3.5 were prepared. To these solutions, each of the above-described polyphenols was added so that the polyphenol was present in the amount of 300 ppm (0.03 wt.%) based on weight. Using the above aqueous solution of aspartame without the polyphenol as a control, five panelists evaluated as to which aqueous solution of aspartame was organoleptically preferable in regard to an unfavorable aftertaste peculiar to aspartame (sweetness and a lingering rough taste).

The results thus obtained are shown in Table 7. Table 7 shows the number of the panelists who evaluated the aqueous solution containing the polyphenol (or the polymerized polyphenol) as having a better aftertaste. It was verified that an aftertaste was improved by addition of the polyphenol (or the polymerized polyphenol) in any degree of sweetness in comparison with the control. The polymerized polyphenol exhibited an aftertaste-improving effect more prominently than did the polyphenol. Among the polymerized polyphenols, the black tea polymerized polyphenol had an aftertaste-improving effect on an unfavorable taste of a high-intensity sweetener similarly to the oolong tea polymerized polyphenol, and the effect was particularly stronger than the effect exhibited by other polymerized polyphenols. Furthermore, all of the panelists evaluated the aqueous solutions made with the polymerized polyphenol derived from tea leaves (semi-fermented tea or fermented tea) as favorable drinks, assessing that body was added to the above drinks and the drinks attained good quality sweetness equivalent to a drink made with sugar, namely, richness in the taste and sharpness in the aftertaste (free from after-sweetness). Accordingly, it was revealed that, among the polymerized polyphenols, the polymerized polyphenol derived from tea leaves (semi-fermented tea or fermented tea) was particularly effective for improving an unfavorable aftertaste of a high-intensity sweetener and adding good quality sweetness.

**[Table 7]**

| | Degree of sweetness | Degree of sweetness |
|---|---|---|
| | 5 | 10 |
| Control | - | - |
| Cacao polyphenol | 2 | 1 |
| Pine bark polymerized | 3 | 3 |
| polyphenol | | |
| Black tea polymerized | 4 | 5 |
| polyphenol | | |
| Oolong tea polymerized | 5 | 5 |
| polyphenol | | |

### <Example 6 (Aftertaste-improving effect of a polymerized catechin on a high-intensity sweetener)>

As a polymerized catechin, the essence A (oolong tea polymerized polyphenol) and the essence B (black tea polymerized polyphenol) were used. Also, as a polymerized polyphenol other than a polymerized catechin, a pine bark polymerized polyphenol (FLAVANGENOL: Toyo Shinyaku, Co., Ltd.) and a cacao polyphenol (Meiji Seika Kaisha, Ltd.) were used. Further, for comparison, quercetin (Sanemic; San-Ei Gen F.F.I., Inc.) was used as a non-polymerized polyphenol. Carbonated drinks (degrees of sweetness of 5 to 15) were prepared according to the compositions shown in Table 8. Also, as a Comparative Example, a carbonated drink without the polyphenol (or the polymerized polyphenol) was prepared. Then, five panelists evaluated effects exerted on a taste of the drinks (unfavorable aftertaste peculiar to a high-intensity sweeteners (sweetness and lingering rough taste) and richness).

**[Table 8]**

| | Com. Ex. 6-1 | Com. Ex. 6-2 | Com. Ex. 6-3 | Ex. 6-1 | Ex. 6-2 | Ex. 6-3 | Ex. 6-4 | Ex. 6-5 | Ex. 6-6 | Ex. 6-7 | Ex. 6-8 | Ex. 6-9 | Ex. 6-10 | Ex. 6-11 | |
|---|---|---|---|---|---|---|---|---|---|---|---|---|---|---|---|
| Sodium citrate | 0.5 | 0.5 | 0.5 | 0.5 | 0.5 | 0.5 | 0.5 | 0.5 | 0.5 | 0.5 | 0.5 | 0.5 | 0.5 | 0.5 | g |
| Anhydrous citric acid | 0.55 | 0.55 | 0.55 | 0.55 | 0.55 | 0.55 | 0.55 | 0.55 | 0.55 | 0.55 | 0.55 | 0.55 | 0.55 | 0.55 | g |
| Acesulfame-K | 0.25 | 0.5 | 0.75 | 0.25 | 0.5 | 0.75 | 0.75 | 0.75 | 0.5 | 0.5 | 0.5 | 0.75 | 0.75 | 0.75 | g |
| Oolong tea polymerized polyphenol | - | - | - | 300 | 300 | 150 | 300 | 500 | - | - | - | - | - | - | ppm |
| Black tea polymerized polyphenol | - | - | - | - | - | - | - | - | 150 | 300 | 400 | - | - | - | ppm |
| Cacao polyphenol | - | - | - | - | - | - | - | - | - | - | - | 300 | - | - | ppm |
| Pine bark polymerized polyphenol | - | - | - | - | - | - | - | - | - | - | - | - | 300 | - | ppm |
| Quercetin | - | - | - | - | - | - | - | - | - | - | - | - | - | 300 | ppm |
| Water | 200 | 200 | 200 | 200 | 200 | 200 | 200 | 200 | 200 | 200 | 200 | 200 | 200 | 200 | g |
| Carbonated water | 800 | 800 | 800 | 800 | 800 | 800 | 800 | 800 | 800 | 800 | 800 | 800 | 800 | 800 | g |
| Total amount | 1000 | 1000 | 1000 | 1000 | 1000 | 1000 | 1000 | 1000 | 1000 | 1000 | 1000 | 1000 | 1000 | 1000 | g |

The results thus obtained are shown in Table 9. Table 9 shows the number of the panelists who evaluated that an improving effect was exerted on richness and an aftertaste in comparison with Comparative Example having the same degree of sweetness. In the carbonated drinks, it was confirmed that a taste-improving effect (addition of richness, reduction in an aftertaste (sweetness and bitterness)) was obtained by addition of the polyphenol (or the polymerized polyphenol), while the effect obtained by addition of quercetin, which was a non-polymerized polyphenol, was small. The polymerized polyphenol exerted excellent effects in terms of richness and an improvement in aftertaste compared with the non-polymerized polyphenol, and particularly, the oolong tea polyphenol was verified to exert marked effects.

Further, a bubbling feeling was evaluated with respect to the drinks of Examples 3, 4, and 5, and Comparative Example 1, each containing a different amount of the oolong tea polymerized polyphenol. It was found that the bubbling feeling was improved in accordance with the amount of the oolong tea polymerized polyphenol incorporated, and particularly, the drinks containing 200 ppm or more oolong tea polymerized polyphenol (polymerized catechin) gave evidently different bubbling feeling from Comparative Example 1. All the panelists evaluated that bubbles in the drinks containing 200 ppm or more oolong tea polymerized polyphenol (polymerized catechin) were fine and persistent, and that the drinks provided a favorable bubbling feeling with fresh stimulation during drinking. Further, these carbonated drinks once opened were transferred to PET bottle containers and recapped, and stored in a refrigerator for one week at 5°C. Subsequently, the drinks were subjected to an organoleptic evaluation. As a result, the drink of Comparative Example 1 was decarbonated, and sweetness stood out due to deteriorated balance between sourness and sweetness and an unfavorable taste peculiar to a high-intensity sweetener was remarkably felt in the drink. On the other hand, in the drinks containing the oolong tea polymerized polyphenol (the polymerized catechin), particularly 200 ppm or more oolong tea polymerized polyphenol (polymerized catechin), sweetness was prevented from standing out and a balance between sourness and sweetness was relatively maintained, and further, an unfavorable taste peculiar to a high-intensity sweetener was absent, while a bubbling feeling was felt, making the above drinks a favorable drink in which drinkability attained right after production was maintained.

**[Table 9]**

| Ex. | Polyphenol | Addition of richness | Fading of sweetness and improvement in bitterness |
|---|---|---|---|
| 6-1 | Oolong tea polymerized polyphenol | 4 | 4 |
| 6-2 | Oolong tea polymerized polyphenol | 5 | 5 |
| 6-3 | Oolong tea polymerized polyphenol | 5 | 5 |
| 6-4 | Oolong tea polymerized polyphenol | 5 | 4 |
| 6-5 | Oolong tea polymerized polyphenol | 4 | 4 |
| 6-6 | Black tea polymerized polyphenol | 4 | 5 |
| 6-7 | Black tea polymerized polyphenol | 5 | 5 |
| 6-8 | Black tea polymerized polyphenol | 4 | 2 |
| 6-9 | Cacao polyphenol | 4 | 2 |
| 6-10 | Pine bark polymerized polyphenol | 2 | 3 |
| 6-11 | Quercetin | 1 | 2 |

### <Example 7 (Comparison between a polymerized catechin and a non-polymerized catechins)>

To an aqueous solution containing 0.05 wt.% of aspartame (degree of sweetness 10), 0.004 wt.% of citric acid, and 0.0055 wt.% of anhydrous citric acid, a non-polymerized catechin (Sunphenon: Taiyo Kagaku Co., Ltd.) was added so that a concentration of the non-polymerized catechin was 200 ppm to 300 ppm. Also, the essence A obtained in Production Example 1 and a polymerized catechin separated from the essence A by HPLC were each added so that the amount of the polymerized catechin was 150 ppm to 350 ppm based on weight.

A component that peaked at the same elution time as theaflavin (a product of Kurita Research Center, referential elution time: 24 minutes) as analyzed by HPLC was separated from the essence A, which was served as a polymerized catechin. Conditions of HPLC are as follows;
- Column: TSK-gel ODS-80TsQA (4.6 mm in the diameter×150 mm, Tosoh Corporation)
- Mobile phase: A: water:acetonitrile:trifluoroacetic acid=900:100:0.5
   B: water:acetonitrile:trifluoroacetic
   acid=200:800:0.5
- Flow rate: 1.0 ml/min
- Column temperature: 40°C
- Gradient conditions: 0% of the liquid B from initiation of the analysis to 5 minutes after initiation
   8% of the liquid B from 5 minutes to
   11 minutes
   10% of the liquid B from 11 minutes to
   21 minutes
   100% of the liquid B from 21 minutes to
   22 minutes
   Keep 100% of the liquid B from
   22 minutes to 30 minutes
   0% of the liquid B from 30 minutes to
   31 minutes
- Detection: A 280 nm
- Input amount: 10 µL
- Four panelists evaluated an aftertaste-improving effect in the drink containing the non-polymerized catechin, the drink containing the essence A, and the drink containing the polymerized catechin A. Evaluation utilized a five-point method (Five points: remarkably improved, four points: moderately improved, three points: slightly improved, two points: an improvement was recognized (vaguely recognized as an improvement), one point: no improvement was recognized), and then an average value was obtained.

The results thus obtained are shown in Table 10. Based on that the scores obtained for the essence A and the polymerized catechin were nearly equal, it was suggested that the polymerized catechin in the essence A might be attributable to an improvement in aftertaste of a high intensity sweetness. Also, the polymerized catechin exhibited a higher effect than did the non-polymerized catechin. Further, when the non-polymerized catechin was added, bitterness derived therefrom was felt and a taste of the drink itself was impaired. On the other hand, when the polymerized catechin (or the essence A) was added, bitterness was not felt, while richness was added and a taste of the drink itself was improved. In Table 10, NT refers to "not tested."

**[Table 10]**

| | | | | | |
|---|---|---|---|---|---|
| Concentration (ppm) | 150 | 200 | 250 | 300 | 350 |
| Non-polymerized | | | | | |
| | NT | 2 | NT | 2.5 | NT |
| catechin | | | | | |
| Polymerized catechins | 3 | 4.5 | 4.5 | 4.5 | 4.5 |
| Essence A | 4 | 4 | NT | 5 | NT |

### <Example 8 (Comparison between a black tea polymerized polyphenol and a component other than the polyphenol)>

Hot water (equal to or more than 90°C) (2000 g) was added to 100 g of black tea leaves and the resulting solution was left standing for one hour (equal to or more than 90°C), thereby a black tea extract was obtained. The extract thus obtained was cooled (10°C) and centrifuged (6000 rpm, 5 minutes) to remove insoluble substances. Subsequently, 50 mL of DIAION HP-20 (Mitsubishi Chemical Corporation) was added to 200 g of the extract from which an insoluble substance was removed, followed by stirring for one hour, thereby a black tea from which the polymerized polyphenol component (polymerized catechin) was removed was produced (hereinafter called HP-20-treated black tea). Also, 45 g of activated carbon was added to 1300 g of the extract from which an insoluble substance was removed as described above, followed by stirring at 50°C or higher temperature for one hour, thereby a black tea from which a non-polymerized catechin and caffeine were removed was produced (hereinafter called activated carbon-treated black tea).

To an aqueous solution containing 0.05 wt.% of aspartame (degree of sweetness of 10), 0.0045 wt.% of citric acid, and 0.0055 wt.% of anhydrous citric acid, the above-described HP-20-treated black tea or activated carbon-treated black tea was added so that a Brix value was 0.13, thereby drinks were prepared. The amount of non-polymerized catechin, polymerized catechin, and caffeine in each kind of the drinks was quantitated by HPLC as described in Production Example 1. Further, four panelists evaluated an aftertaste-improving effect. Evaluation was conducted by a five-point method similarly to Example 7, and then an average value was obtained.

The results thus obtained are shown in Table 11.
The HP-20-treated black tea had less non-polymerized catechin and polymerized catechin than did the activated carbon-treated black tea, and particularly, marked difference was noted in the amount of polymerized catechin. Further, the activated carbon-treated black tea exhibited a stronger aftertaste-improving effect on aspartame. The above result suggests that the polymerized polyphenol is the main component responsible for an aftertaste-improving effect. Furthermore, richness was not added to the HP-20-treated black tea, while that was added to the activated carbon-treated black tea.

**[Table 11]**

| | Non-polymerized catechin | Polymerized catechins (ppm) | Caffeine | Organoleptic evaluation score |
|---|---|---|---|---|
| HP-20-treated black tea | 10.6 | 20 | 10.1 1 | 2.5 |
| Activated carbon-treated black tea | 15.3 | 146 | 0.37 | 3.5 |

### <Example 9>

To an aqueous solution containing 0.05 wt.% of aspartame (degree of sweetness 10), 0.0045 wt.% of citric acid, and 0.0055 wt.% of anhydrous citric acid, the essence B of Production Example 2 was added so that the amount of polymerized polyphenol was 1000 ppm based on weight. Values obtained by a component analysis were as follows based on weight; polymerized catechin: 1000 ppm, non-polymerized catechin: 105 ppm, and caffeine: 2.5 ppm. As a result of evaluation by drinking, the above solutions were found to be a drink having an improved taste with richness and an improved aftertaste peculiar to aspartame (absence of bitterness and astringency).

### <Referential Example: Verification of the concentration of non-polymerized catechin and caffeine>

To an aqueous solution containing 0.05 wt.% of aspartame (degree of sweetness 10), 0.0045 wt.% of citric acid, and 0.0055 wt.% of anhydrous citric acid, the essence A obtained in Production Example 1 or the essence B obtained in Production Example 2, and a lyophilized product of oolong tea or the black tea extract (Brix 2) of Production Example 2 were added, thereby drinks containing a non-polymerized catechin and caffeine at various concentrations (Table 12) were prepared (the concentration of polymerized catechin was 300 ppm based on weight) (In Table 12, the "black tea" refers to one containing the essence B and the black tea extract, and the "oolong tea" refers to one containing the essence A and the lyophilized product of oolong tea). Four panelists evaluated bitterness (astringency) of the above drinks. Evaluation utilized a five-point method (one point: no bitterness (drinkable without discomfort), two points: slightly bitter, three points: bitter, four points: difficult to drink due to slight bitterness, five points: unsuitable as a drink due to strong bitterness), and then an average value was obtained.

The results thus obtained are shown in Table 12. An improvement in taste of a drink (addition of richness and sharpness in an aftertaste) was recognized with addition of 300 ppm of the polymerized catechin. Further, it was found that a favorable drink was provided when the amount of non-polymerized catechin was equal to or less than 300 ppm and a total amount of non-polymerized catechin and caffeine was equal to or less than 450 ppm, preferably when the amount of non-polymerized catechin was equal to or less than 200 ppm and a total amount of non-polymerized catechin and caffeine was equal to or less than 300 ppm, and more preferably when the amount of non-polymerized catechin was equal to or less than 150 ppm and a total amount of non-polymerized catechin and caffeine was equal to or less than 250 ppm.

**[Table 12]**

| | Polymerized catechins | Non-polymerized catechin | Caffeine | Non-polymerized catechin+caffeine | Organoleptic score |
|---|---|---|---|---|---|
| | (ppm) | | | | |
| Black tea | 300 | 3.0 | 0.7 | 3.7 | 1 |
| | 300 | 34.9 | 39.3 | 74.1 | 1 |
| | 300 | 74.6 | 87.2 | 161.8 | 1 |
| | 300 | 114.4 | 135.2 | 249.5 | 1 |
| | 300 | 154.3 | 183.4 | 337.7 | 3 |
| | 300 | 194.0 | 231.3 | 425.4 | 4 |
| Oolong tea | 300 | 19.4 | 0.5 | 19.9 | 1 |
| | 300 | 49.1 | 16.7 | 65.9 | 1 |
| | 300 | 98.7 | 43.8 | 142.5 | 1 |
| | 300 | 148.2 | 70.8 | 219.1 | 1 |
| | 300 | 197.8 | 97.9 | 295.7 | 2 |
| | 300 | 296.9 | 152.0 | 448.9 | 3 |
| | 300 | 514.9 | 271.0 | 785.9 | 4 |

## Claims

1. A food or drink comprising a sweetener and a polymerized polyphenol at such a concentration that a taste of the sweetener is improved.

2. The food or drink according to claim 1, wherein a concentration of the polymerized polyphenol is 0.010 wt.% to 0.100 wt.%.

3. The food or drink according to claim 1 or 2, wherein the polymerized polyphenol is a polymerized catechin.

4. The food or drink according to claim 3, further comprising a non-polymerized catechin, wherein the polymerized catechin is contained at a higher concentration than the non-polymerized catechin.

5. The food or drink according to claim 4, comprising the polymerized catechin at four or more times the non-polymerized catechin in terms of concentration.

6. The food or drink according to any one of claims 3 to 5, wherein the polymerized catechin is derived from a semi-fermented tea or a fermented tea.

7. The food or drink according to any one of claims 1 to 6, wherein a part or all of the sweetener is a high-intensity sweetener.

8. The food or drink according to any one of claims 1 to 7, provided as a drink.

9. The food or drink according to claim 8, provided as a carbonated drink.

10. The food or drink according to claim 8 or 9, provided as a low-calorie drink.

11. A method for improving a taste of a drink containing a sweetener, **characterized by** using a polymerized polyphenol.

12. The method according to claim 11, wherein the polymerized polyphenol is used at a concentration of 0.010 wt.% to 0.100 wt.%.

13. The food or drink according to claim 11 or 12, wherein the polymerized polyphenol is a polymerized catechin.

14. The method according to claim 13, wherein a non-polymerized catechin is further used and the polymerized catechin is used at a higher concentration than the non-polymerized catechin.

15. The method according to claim 14, wherein the polymerized catechin is used at four or more times the non-polymerized catechin in terms of concentration.

16. The method according to any one of claims 13 to 15, wherein the polymerized catechin is derived from a semi-fermented tea or a fermented tea.

## Amended claims

### Amended claims under Art. 19.1 PCT

1. A food or drink comprising a sweetener and a polymerized polyphenol at such a concentration that a taste of the sweetener is improved.

2. The food or drink according to claim 1, wherein a concentration of the polymerized polyphenol is 0.010 wt.% to 0.100 wt.%.

3. The food or drink according to claim 1 or 2, wherein the polymerized polyphenol is a polymerized catechin.

4. The food or drink according to claim 3, further comprising a non-polymerized catechin, wherein the polymerized catechin is contained at a higher concentration than the non-polymerized catechin.

5. The food or drink according to claim 4, comprising the polymerized catechin at four or more times the non-polymerized catechin in terms of concentration.

6. The food or drink according to any one of claims 3 to 5, wherein the polymerized catechin is derived from a semi-fermented tea or a fermented tea.

7. The food or drink according to any one of claims 1 to 6, wherein a part or all of the sweetener is a high-intensity sweetener.

8. The food or drink according to any one of claims 1 to 7, provided as a drink.

9. The food or drink according to claim 8, provided as a carbonated drink.

10. The food or drink according to claim 8 or 9, provided as a low-calorie drink.

11. A method for improving a taste of a drink containing a sweetener, **characterized by** using a polymerized polyphenol.

12. The method according to claim 11, wherein the polymerized polyphenol is used at a concentration of 0.010 wt.% to 0.100 wt.%.

13. (Amended) The method according to claim 11 or 12, wherein the polymerized polyphenol is a polymerized catechin.

14. The method according to claim 13, wherein a non-polymerized catechin is further used and the polymerized catechin is used at a higher concentration than the non-polymerized catechin.

15. The method according to claim 14, wherein the polymerized catechin is used at four or more times the non-polymerized catechin in terms of concentration.

16. The method according to any one of claims 13 to 15, wherein the polymerized catechin is derived from a semi-fermented tea or a fermented tea.
